# EUROPÄISCHE PATENTSCHRIFT

(11) **EP 0 326 844 B1**
(45) Veröffentlichungstag und Bekanntmachung des Hinweises auf die Patenterteilung: **16.06.1993**
(21) Anmeldenummer: 89100678.5
(22) Anmeldetag: 17.01.1989
(51) Int. Cl.: F16K 27/06, F16K 5/06

(54) **Absperr- oder Regelarmatur**
Shut-off or control valve
Vanne d'arrêt ou de régulation

(30) Priorität: 05.02.1988 DE 3803417
(43) Veröffentlichungstag der Anmeldung: 09.08.1989
(73) Patentinhaber: METALPRAECIS BERCHEM + SCHABERG GESELLSCHAFT FÜR METALLFORMGEBUNG MIT BESCHRÄNKTER HAFTUNG, D-45803 Gelsenkirchen (DE)
(72) Erfinder: Berchem, Rütger, Dr. Dipl.-Ing., D-4300 Essen 1 (DE)
(74) Vertreter: Andrejewski, Walter

(56) Entgegenhaltungen:
- US-A- 3 985 150
- PATENT ABSTRACTS OF JAPAN, Band 10, Nr. 320 (M-530)[2376], 30. Oktober 1986; & JP-A-61 127 977 (KORENAGA SHOJI K.K.) 16-06-1986

## Beschreibung

Die Erfindung betrifft eine Absperr- oder Regelarmatur, insbesondere Kugelhahn, für gasförmige oder flüssige Stoffströme, mit einem Gehäuse und Rohranschlußelementen sowie it einem Stellelement und diesem zugeordneten Sitzelementen, wobei das Stellelement und die Sitzelemente korrespondierende Strömungskanäle aufweisen, die in sinterkeramischem Werkstoff geführt sind, und wobei zumindest das Stellelement eine sinterkeramische Hülse aufweist, die in einer Bohrung des Stellelementes angeordnet ist und den Strömungskanal umfangsseitig begrenzt. Eine derartige Absperr- oder Regelarmatur ist aus der JP-A-61-127 977 bekannt. - Es versteht sich, daß der sinterkeramische Werkstoff, die sogenannte Industriekeramik, zur Aufnahme der chemischen und/oder physikalischen Beanspruchungen, die der Stoffstrom auf ihn ausübt, eingerichtet ist. Im allgemeinen ist das Stellelement, elastomerfrei abgedichtet, in die Sitzelemente eingepaßt. Dazu gehört eine entsprechende Präzisionsbearbeitung. Das Gehäuse und die Rohranschlußelemente bestehen im allgemeinen aus Metall, zumeist aus Stahl.

Bei dieser bekannten Absperr- oder Regelarmatur (JP-A-61-127 977) ist die sinterkeramische Hülse in die Bohrung des Stellelementes eingeklebt. Das erfordert eine sorgfältige Bearbeitung sowohl des Stellelementes als auch der Hülse, wenn mechanische Zwänge der Hülse vermieden werden sollen.

Aufgabe der Erfindung ist es, eine gattungsgemäße Absperr- oder Regelarmatur dahingehend zu verbessern, daß bei geringerem Bearbeitungsaufwand störende mechanische Zwänge der sinterkeramischen Hülse vermieden werden.

Diese Aufgabe wird dadurch gelöst, daß die Hülse aus mehreren ringförmigen, formschlüssig in der Bohrung gehaltenen Hülsenabschnitten zusammengesetzt ist, die derart druckentlastet in der Bohrung angeordnet sind, daß der statische Druck des Mediums im Stoffstrom strömungskanalseitig ausreichend auch auf der Außenseite der Hülse wirkt. - Erfindungsgemäß können dünnwandige Hülsenabschnitte eingesetzt werden, ohne daß Bruchgefahr aufgrund unkontrollierbarer mechanischer Zwänge besteht. Das liegt unter anderem daran, daß der statische Druck des Mediums im Stoffstrom strömungskanalseitig ausreichend auch auf der Außenseite der Hülse wirkt. Dazu trägt einerseits die Formschlußverbindung bei und andererseits die Tatsache, daß die ringförmigen Hülsenabschnitte zwischen sich unvermeidbare Spalte bilden sowie außerdem zwischen der Hülse und der Innenwand der Bohrung ein mehr oder weniger großer Ringraum verbleibt. Nach bevorzugter Ausführungsform der Erfindung sind die Hülsenabschnitte mit Konusanpassungen (Innenkonus in Außenkonus) ineinander gesteckt.

Nach bevorzugter Ausführung der Erfindung sollen die Hülsenabschnitte Formschlußelemente in Form von Vorsprüngen aufweisen, die mit komplementären Ausnehmungen am Stellelement bzw. an den Sitzelementen zusammenwirken. Die Formschlußelemente haben lediglich die Kräfte aufzunehmen, die von dem Stoffstrom auf die Hülse ausgeübt werden und die Hülse ist im übrigen zwangfrei angeordnet.

Gegenstand der Erfindung ist insbesondere eine Absperr- oder Regelarmatur in der Ausführung mit Kugelhahn, wobei erfindungsgemäß Hülsenabschnitte aus sinterkeramischem Werkstoff lediglich in die Ventilkugel eingesetzt sind und die Sitzelemente einstückig aus sinterkeramischem Werkstoff ausgeführt sind.

Die erreichten Vorteile sind darin zu sehen, daß bei einer erfindungsgemäßen Absperr- und Regelarmatur zwar alle positiven Eigenschaften, die bei der bekannten Ausführungsform der sinterkeramische Werkstoff bewirkt, ausgenutzt werden, der mengenmäßige Einsatz dieses Werkstoffes jedoch wesentlich reduziert ist, und zwar ohne Beeinträchtigung der Funktionsfähigkeit. Überraschenderweise kann in der beschriebenen Art und Weise mit Hülsen aus sinterkeramischem Werkstoff gearbeitet werden, wenn diese druckentlastet und ohne störende mechanische Zwänge angeordnet sind. Druckentlastet meint, daß der statische Druck des Mediums im Stoffstrom strömungskanalseitig ausreichend auch auf der Außenseite der Hülse wirkt.

Im folgenden wird die Erfindung anhand einer lediglich ein Ausführungsbeispiel darstellenden Zeichnung näher erläutert. Es zeigen in schematischer Darstellung
- Fig. 1: einen Längsschnitt durch eine erfindungsgemäße Absperr- oder Regelarmatur in der Ausführungsform eines Kugelhahns,
- Fig. 2: in gegenüber der Fig. 1 vergrößerter Darstellung den Kugelhahn aus dem Gegenstand der Fig. 1,
- Fig. 3: eine andere Ausführungsform des Gegenstandes nach Fig. 2.

Der in den Figuren dargestellte Kugelhahn ist als Absperr- und Regelarmatur für gasförmige und flüssige Stoffströme, insbesondere mit abrasiven Feststoffbeimischungen, geeignet. Zum grundsätzlichen Aufbau gehören Rohranschlußelemente 1, Sitzringe 2, eine Ventilkugel 3 und eine Welle 4 sowie ein Gehäuse 5 mit Wellenführung und Wellenabdichtung 6. Die Ventilkugel 3 und die Sitzringe 2 sind erfindungsgemäß in besonderer Weise gestaltet. Sie besitzen durch Strömungspfeile angedeutete Strömungskanäle, die in sinterkeramischem Werkstoff geführt sind. Die Ventilkugel 3 ist elastomerefrei dichtend in die Sitzringe 2 eingepaßt. Sie weist eine Ausnehmung 7 auf, in die die Welle formschlüssig eingesetzt ist. Die Welle 4 ist durch die Wellendichtung 6 geführt, die als Stoffbuchsdichtung ausgebildet ist. Das die Wellendichtung 6 aufnehmende Gehäuse 5 ist mit einem die Sitzringe 2 in ihrem Umfang 8 umschließenden Mantelelement 9 ausgebildet. Im Ausführungsbeispiel und nach bevorzugter Ausführungsform der Erfindung sind die Sitzringe 2 in dem Mantelelement 9 mit einer Toleranz von 15 bis 50 µm eingesetzt. Die Rohranschlußelemente 1 besitzen einen Innendurchmesser, welcher der Durchgangsbohrung der Sitzringe 2 und der Ventilkugel 3 entspricht. In ihrer dem Gehäuse 5 zugewandten Seite weisen sie einen Spannflansch 10 mit einer ringförmigen Ausnehmung 11 für das Mantelelement 9 und mit einer der Stirnfläche 12 der Sitzringe komplementären Dichtungsfläche auf. Das Mantelelement 9 des Wellenführungsgehäuses 5 ist in die ringförmigen Ausnehmungen der Spannflansche 10 eingesetzt und zwischen den Spannflanschen 10 verspannt. Als Spannelemente dienen Zugschrauben 13. Zwischen dem Mantelelement 9 und den Spannflanschen 10 sind Rundschnurdichtungen 14 angeordnet. Die Rohranschlußelemente 1 und das Gehäuse 5 sind mit den Zugschrauben 13 zu einem starren und nach außen hin dichten Aggregat verschraubt, in welches die keramischen Bauteile druck- und biegemomentfrei eingesetzt sind. Zwischen der äußeren Stirnfläche 12 der keramischen Sitzringe 2 und der komplementären Dichtungsfläche der Spannflansche 10 ist eine Weichdichtung 15 angeordnet. Diese Weichdichtung 15 gibt den Sitzringen 2 eine geringe Beweglichkeit. Durch die Elastizität dieser Weichdichtungen 15 liegen die Sitzringe 2 unter Vorspannung an der Ventilkugel 3 an.

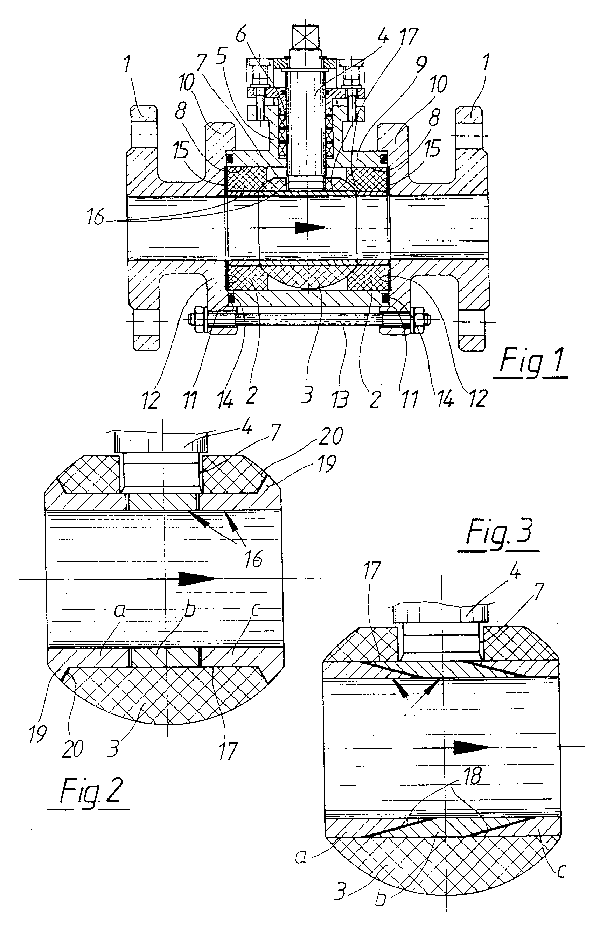

Im Ausführungsbeispiel sind die Strömungskanäle des Stellelementes 3 und die der Sitzelemente 2 in einer Hülse 16 angeordnet, die aus dem sinterkeramischen Werkstoff besteht. Die Hülse 16 ist in eine Bohrung 17 des Stellelementes bzw. der Sitzringe eingesetzt, und zwar druckenlastet in bezug auf den Stoffstrom, wie eingangs erläutert wurde. Im Ausführungsbeispiel sind die Hülsen 16 in den zugeordneten Bohrungen 17 formschlüssig oder kraftschlüssig gehalten. Die Hülse 16 ist mehrteilig ausgeführt, nämlich aus mehreren ringförmigen Hülsenabschnitten a, b, c zusammengesetzt. Aus der Fig. 3 entnimmt man, daß die Hülsenabschnitte a, b, c ... mit Konuspassungen 18 in Form von Innenkonus und Außenkonus ineinandergesetzt sind. Die Formschlußelemente sind im Ausführungsbeispiel Vorsprünge 19, die mit komplementären Ausnehmungen 20 am Stellelement 3 bzw. an den Sitzelementen 2 zusammenwirken. Die Formschlußelemente 19, 20 haben lediglich die Kräfte aufzunehmen, die von dem Stoffstrom auf die Hülse ausgeübt werden. Bei der dargestellten Ausführungsform als Kugelhahn kann es bei Absperr- und Regelarmaturen für hohe Drücke tunlich sein, lediglich das Stellelement 3, nämlich die Kugel, in der beschriebenen Weise mit einer mehrteiligen Hülse 16 aus sinterkeramischem Werkstoff auszurüsten.

Das in der Fig. 1 dargestellte Ausführungsbeispiel ist ohne weiteres für Nennweiten von 25 bis 200 mm, Betriebsdrücke bis 100 bar und Temperaturen zwischen minus 30° C und 180° C, geeignet. Als Werkstoff für die Ventilkugel 3 und die Sitzringe 2 sind Sinterkorund und Al₂O₃ eingesetzt. Die Sitzleckrate ist kleiner als 0,01 % des KV-Wertes, wobei der KV-Wert des Kugelhahnes in 25 mm Nennweite KV = 28 und eines Kugelhahnes in 100 mm Nennweite KV = 430 beträgt. Das Drehmoment zur Betätigung der Ventilkugel ist 20 Nm bei einem Kugelhahn in 25 mm Nennweite und 130 Nm bei einem Kugelhahn in 100 mm Nennweite, jedoch bei einem Betriebsdruck von 10 bar.

## Patentansprüche

1. Absperr- oder Regelarmatur, insbesondere Kugelhahn, für gasförmige oder flüssige Stoffströme, mit einem Gehäuse (5) und Rohranschlußelementen (1) sowie mit einem Stellelement (3) und diesem zugeordneten Sitzelementen (2), wobei das Stellelement (3) und die Sitzelemente (2) korrespondierende Strömungskanäle aufweisen, die in sinterkeramischem Werkstoff geführt sind, und wobei zumindest das Stellelement (3) eine sinterkeramische Hülse (16) aufweist, die in einer Bohrung (17) des Stellelementes (3) angeordnet ist und den Strömungskanal umfangsseitig begrenzt, **dadurch gekennzeichnet,** daß die Hülse aus mehreren ringförmigen, formschlüssig der Bohrung (17) gehaltenen Hülsenabschnitten (a, b, c) zusammengesetzt ist, die derart druckentlastet in der Bohrung (17) angeordnet sind, daß der statische Druck des Mediums im Stoffstrom strömungskanalseitig ausreichend auch auf der Außenseite Hülse (16) wirkt.

2. Absperr- oder Regelarmatur nach Anspruch 1, dadurch gekennzeichnet, daß die Hülsenabschnitte (a, b, c) mit Konuspassungen (18) (Innenkonus in Außenkonus) ineinander gesteckt sind.

3. Absperr- oder Regelarmatur nach einem der Ansprüche 1 oder 2, dadurch gekennzeichnet, daß die Hülsenabschnitte (a, b, c) Formschlußelemente in Form von Vorsprüngen (19) aufweisen, die mit komplementären Ausnehmungen (20) am Stellelement (3) bzw. an den Sitzelementen (2) zusammenwirken.

4. Absperr- oder Regelarmatur nach Anspruch 3, dadurch gekennzeichnet, daß die Formschlußelemente (19) die Kräfte aufnehmen, die von dem Stoffstrom auf die Hülse ausgeübt werden.

5. Absperr- und Regelarmatur nach einem der Ansprüche 1 bis 4 in der Ausführungsform als Kugelhahn, dadurch gekennzeichnet, daß Hülsenabschnitte (a, b, c) aus sinterkeramischem Werkstoff lediglich in die Ventilkugel (3) eingesetzt sind und daß die Sitzelemente (2) einstückig aus sinterkeramischem Werkstoff ausgeführt sind.

## Claims

1. A shut-off or control fitting, particularly a ball valve, for flows of gaseous or liquid material, with a housing (5) and pipe connection elements (1) and with a control element (3) and seating elements (2) associated with the latter, wherein the control element (3) and the seating elements (2) have corresponding flow channels which are contained in sintered ceramic material, and wherein at least the control element (3) has a sintered ceramic bush (16) which is disposed in a bore (17) in the control element (3) and which delimits the periphery of the flow channel, characterised in that the bush is assembled from a plurality of annular bush sections (a, b, c) mounted with a positive fit in the bore (17), which are disposed relieved from pressure in the bore (17) in such a way that the static pressure of the medium in the flow of material on the flow channel side also acts sufficiently on the outside of the bush (16).

2. A shut-off or control fitting according to claim 1, characterised in that the bush sections (a, b, c) are inserted in each other by means of conical adapters (18) (inner cone in outer cone).

3. A shut-off or control fitting according to one of claims 1 or 2, characterised in that the bush sections (a, b, c) have positive locking elements in the form of projections (19) which interact with complementary recesses (20) on the control element (3) or on the seating elements (2).

4. A shut-off or control element according to claim 3, characterised in that the positive locking elements (19) absorb the forces which are exerted by the flow of material on the bush.

5. A shut-off or control element according to any one of claims 1 to 4 in its form of construction as a ball valve, characterised in that bush sections (a, b, c) made of sintered ceramic material are only used in the valve ball (3), and that the seating elements (2) are constructed in one piece from sintered ceramic material.

## Revendications

1. Vanne d'arrêt au de régulation, en particulier un robinet à boisseau sphérique, pour des courants de matières gazeuses au liquides, comprenant un carter (5) et des éléments de raccord de tuyau (1) ainsi qu'un élément de réglage (3) et des éléments de siège (2) associés à celui-ci, l'élément de réglage (3) et les éléments de siège (2) présentant des canaux d'écoulement correspondants ménagés dans une matière céramique frittée, au mains l'élément de réglage (3) comprenant une douille (16) en céramique frittée placée dans un alésage (17) de l'élément de réglage (3) et délimitant la périphérie du canal d'écoulement, caractérisée par le fait que la douille est assemblée à partir de plusieurs sections de douille annulaires (a, b, c) maintenues à engagement positif dans l'alésage (17), qui sont disposées dans ledit alésage (17) de manière tellement détendue que, du côté du canal d'écoulement, la pression statique du fluide dans le courant de matière agit suffisamment aussi sur la face extérieure de la douille (16).

2. Vanne d'arrêt ou de régulation selon la revendication 1, caractérisée par le fait que les sections de douille (a, b, c) sont emboîtées les unes dans les autres au moyen d'adaptateurs coniques (18) (cône intérieur dans cône extérieur).

3. Vanne d'arrêt ou de régulation selon l'une des revendications 1 ou 2, caractérisée par le fait que les sections de douille (a, b, c) présentent des éléments à engagement positif sous la forme de saillie (19) qui coopèrent avec des évidements complémentaires (20) sur l'élément de réglage (3) et respectivement sur les bagues de siège (2).

4. Vanne d'arrêt ou de régulation selon la revendication 3, caractérisée par le fait que les éléments à engagement positif (19) absorbent les forces que le courant de matière applique à la douille.

5. Vanne d'arrêt ou de régulation selon l'une quelconque des revendications 1 à 4, dans la variante de robinet à boisseau sphérique, caractérisée par le fait que des sections de douille (a, b, c) en céramique frittée sont insérées uniquement dans la bille de soupape (3) et que les éléments de siège (2) sont réalisés d'un seul tenant en céramique frittée.
